# EUROPÄISCHE PATENTSCHRIFT

(11) **EP 1 640 095 B1**
(45) Veröffentlichungstag und Bekanntmachung des Hinweises auf die Patenterteilung: **16.01.2008**
(21) Anmeldenummer: 05018463.9
(22) Anmeldetag: 25.08.2005
(51) Int. Cl.: B23G 5/18, B23C 5/22

(54) **Fräswerkzeug, insbesondere Gewindefräser**
Milling tool, especially thread milling cutter
Outil de fraisage, plus particulièrement fraise à fileter

(30) Priorität: 02.09.2004 DE 102004043409
(43) Veröffentlichungstag der Anmeldung: 29.03.2006
(73) Patentinhaber: VARGUS Ltd., 22311 Nahariya (IL)
(72) Erfinder: Morgulis, Rafael, IL-21940 Karmiel (IL)
(74) Vertreter: Patentanwälte Ruff, Wilhelm, Beier, Dauster & Partner

(56) Entgegenhaltungen:
- EP-A- 0 620 070
- WO-A-82/00609
- DE-A1- 3 838 816
- DE-U1- 8 528 605
- US-A- 1 411 799
- US-A- 4 335 983
- US-A- 4 400 117
- US-A- 4 477 212
- US-A- 4 697 963
- US-A- 5 033 916
- US-A- 5 658 100
- US-B1- 6 499 917

## Beschreibung

### Anwendungsgebiet und Stand der Technik

Die Erfindung betrifft ein Fräswerkzeug, insbesondere einen Gewindefräser, gemäß dem Oberbegriff des Anspruchs 1. Ein solches Fräswerkzeug ist aus der US 6 499 917 B1 bekannt.

Aus der US 6 499 917 B1 ist ein Gewindefräser bekannt geworden, der einen um eine Werkzeugachse drehbaren Werkzeughalter und mehrere daran anbringbare Schneideinsätze aufweist. In im wesentlichen in Werkzeugachsrichtung verlaufenden, über den Werkzeugumfang gleichmäßig verteilte, nutartige Ausnehmungen sind Schneideinsätze einsetzbar, die eine langgestreckte Leistenform und als Schneiden eine Gewindeprofilierung haben. Sie sind durch Klemmschrauben in den Ausnehmungen festsetzbar, die auf eine Seite des Schneideinsatzes wirken. Die Klemmschrauben verlaufen unter einem spitzen Winkel zur Schneideinsatzmittelebene und treffen mit ihren Endflächen flach auf schräge Vertiefungen in den Seiten des Schneideinsatzes. Dadurch soll eine den Schneideinsatz in die Ausnehmung hinein pressende Kraft erzeugt werden.

Bei anderen Gewindefräsern (US 5 924 825, 5 059 070, 5 088 861 und 4 425 063) sind Schneideinsätze mittels durch die Einsätze hindurch gehende Schrauben befestigt. Bei der Ausführung nach US 5 873 684 und 5 112 162 werden formschlüssige Befestigungselemente in Form von Stiften oder Klemmkeilen zur Befestigung der Einsätze verwendet.

### Aufgabe und Lösung

Aufgabe der Erfindung ist es, ein Fräswerkzeug mit einem Werkzeughalter und mehreren Schneideinsätzen zu schaffen, das leicht und sicher zu befestigen ist und die Starrheit und Festigkeit des Gesamtsystems fördert.

Diese Aufgabe wird durch den Gegenstand des Anspruchs 1 gelöst. Vorteilhafte Ausführungen sind in den Unteransprüchen beschrieben.

Dadurch, dass entsprechende Gewindebohrungen für benachbarte Ausnehmungen bzw. darin eingesetzte Schneideinsätze, in Richtung der Werkzeugachse gegeneinander versetzt sind, wird vermieden, dass bei der Bestückung mit mehreren Schneideinsätzen der Werkzeughalter dadurch geschwächt wird, dass die Gewindebohrungen alle in der gleichen radialen Ebene liegen. Es ist somit möglich, bei der Anordnung nach der Erfindung auch Werkzeughalter mit kleinem Durchmesser, also für kleine Bohrungen, mit ausreichend großen Klemmschrauben zu versehen. Der Winkel zwischen der Mittelebene der Ausnehmungen, also auch der Schneideinsätze, und den Gewindebohrungsachsen sollte möglichst ein rechter Winkel sein und die Klemmschrauben und die Schneideinsätze sollten so ausgebildet sein, dass sie im wesentlichen rechtwinklig auf die Schneideinsätze wirken. Diese werden also nur durch Klemmung und nicht durch Formschluss in ihrer Einsatzposition festgehalten. Das hat den Vorteil, dass gewisse Einstellmöglichkeiten bezüglich Durchmesser und Ausrichtung gegeben sind. Der Schneideinsatz kann also, muss aber nicht, am Boden der Ausnehmung mit seiner Endfläche anliegen.

Normalerweise sind je Schneideinsatz drei Klemmschrauben vorgesehen, von denen die beiden äußeren auf die glatte, unvertiefte Seite des Schneideinsatzes einwirken. Die mittlere Klemmschraube wirkt auf den Boden einer flachen Vertiefung, beispielsweise einer kreisrunden Senkung. Dabei ist das wirksame Ende der Klemmschraube, beispielsweise durch einen Vorsprung, so ausgebildet, dass es zwar auf dem Boden der Vertiefung aufliegt, jedoch dessen umlaufenden Rand nicht berührt, also Einstellmöglichkeiten in alle Richtungen belässt. Durch das Eindringen in die Vertiefung bildet jedoch diese Klemmschraube eine Sicherung gegen unbeabsichtigtes Herausfallen oder gar Herausschleudern unter Zentrifugalkraft, wenn, z.B. durch einen Fehler beim Einsetzen, die Schrauben nicht festgezogen wurden. Diese Vertiefung stellt also einen zusätzlichen Sicherungseffekt dar, der für eine formschlüssige Sicherung sorgt, ohne die sonstigen Möglichkeiten zu beschränken.

Um bei dem vorgesehenen Versatz der Klemmschrauben nur einen Typ von Schneideinsätzen für alle Ausnehmungen am Umfang eines Werkzeughalters verwenden zu können, sind auf jeder Seite des Schneideinsatzes soviel Vertiefungen vorgesehen wie Versatzmöglichkeiten, also meist soviel wie der Werkzeughalter Schneideinsätze trägt. Die Vertiefungen könnten allerdings auch zu einer abgesenkten Fläche, z.B. einer Art Langloch, zusammengefasst sein, sofern zur Endfläche hin eine Erhebung vorhanden ist, die die formschlüssige Sicherung sicherstellt. Einzelne Einsenkungen sind jedoch leichter zu fertigen und sichern die Einsätze auch in Längsrichtung.

Da es sich bei den Schneideinsätzen vorzugsweise um Wendeplatten handelt, d.h. die Profilschneide von beiden Seite eingesetzt werden kann, sind auch die Vertiefungen auf beiden Seiten vorgesehen.

### Kurzbeschreibung der Zeichnungen

Ein Ausführungsbeispiel der Erfindung ist in der Zeichnung dargestellt und wird im Folgenden näher erläutert. Es zeigen.
- Fig. 1: eine perspektivische Ansicht eines Fräswerkzeuges nach der Erfindung,
- Fig. 2: eine Seitenansicht des Fräswerkzeuges,
- Fig. 3: ein Detail, geschnitten nach der Linie III-III in Fig. 2,
- Fig. 4a bis 4b: drei jeweils um 120° gedrehte perspektivische Darstellungen der Schneideinsätze und ihrer Klemmschrauben in den Fräswerkzeugen nach Fig. 1 und 2 (jeweils ohne Werkzeughalter),
- Fig. 5: eine perspektivische Ansicht eines mit zwei Schneideinsätzen ausgerüsteten Fräswerkzeugs,
- Fig. 6: eine Draufsicht auf das Fräswerkzeug nach Fig. 5 und
- Fig. 7: einen Schnitt nach der Linie VII-VII in Fig. 6.

### Beschreibung von Ausführungsbeispielen

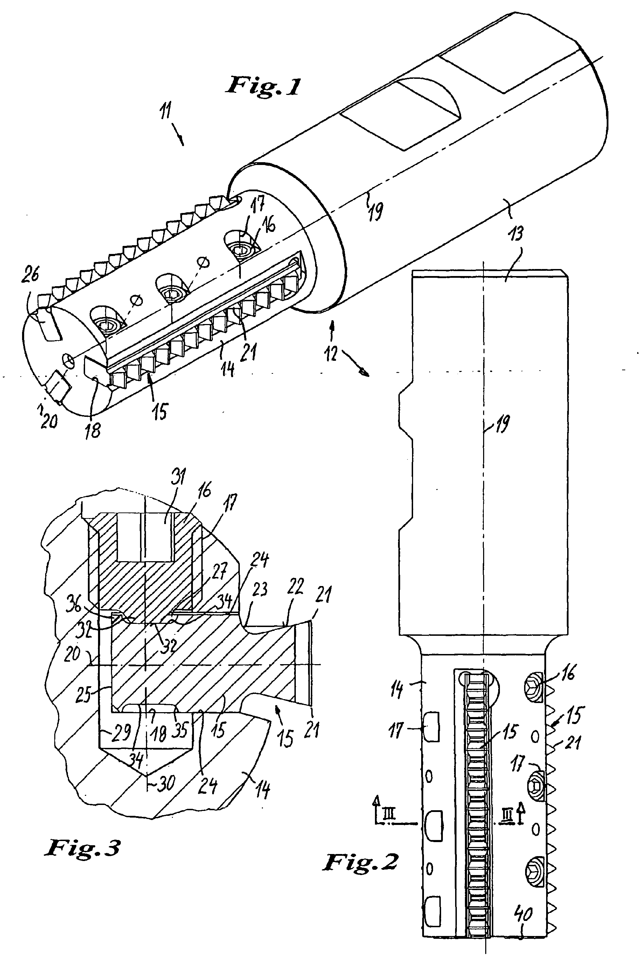

Die Figuren 1 bis 4 zeigen ein Fräswerkzeug 11 mit einem Werkzeughalter 12, das einen Einspannschaft 13 größeren Durchmessers und einen Fräserschaft 14 etwas geringeren Durchmessers aufweist. In diesem sind drei Schneideinsätze 15 eingespannt, und zwar mittels Klemmschrauben 16, die in Gewindebohrungen 17 im Fräserschaft eingeschraubt sind.

Die Schneideinsätze 15 liegen in Ausnehmungen 18, die nach Art von rechteckigen Nuten ausgebildet sind, die sich längs des Fräserschafts erstrecken und parallel zur Werkzeugmittelachse 19 verlaufen. Ihre Mittelebenen 20, die parallel zu denen der Schneideinsätze verlaufen und mit diesen fast übereinstimmen, verlaufen radial und parallel zur Achse 19.

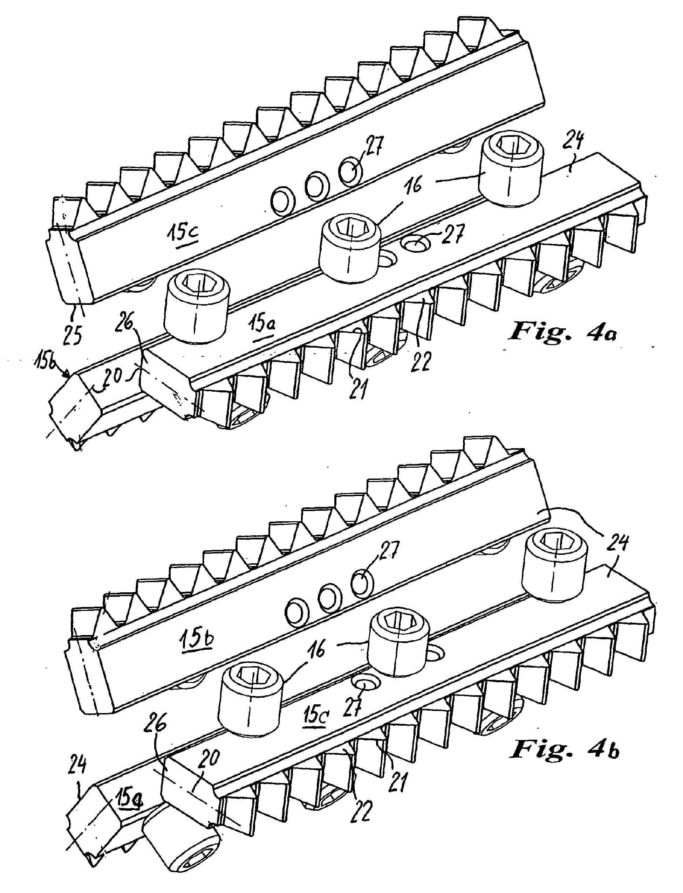

Die Schneideinsätze 15, die am besten aus den Figuren 4a bis 4c zu erkennen sind, haben die Form langgestrecker Leisten, die an einer Längsseite Schneiden 21 mit einer zum Gewindeschneiden vorgesehenen gezahnten Profilierung haben. Die Schneiden sind um die Mittelebene 20 symmetrisch, so dass Schneiden 21 an beiden Seiten vorhanden sind. Demgemäß ist der Schneideinsatz durch Wenden um 180° zweifach zu benutzen. Daher ist auch auf beiden Seiten eine entsprechende schräge Spanfläche 22 für einen geeigneten Spanwinkel und eine daran anschließende Spanbrecherstufe 23 eingeschliffen.

Der Schneideinsatz hat ferner im wesentlichen ebene und zueinander parallele Seiten 24 und eine den Schneiden entgegengesetzte Endfläche 25 sowie an den Enden seiner Leistenform Stirnflächen 26.

In der Mitte der Längserstreckung der Seiten 24 sind, symmetrisch zur Mitte, jedoch im Abstand voneinander, je drei Vertiefungen 27 je Seite vorgesehen. Es handelt sich um Einsenkungen mit ebenem Boden (s. Fig. 3), die relativ nahe an der hinteren, zur Endfläche weisenden Kante der Seiten vorgesehen sind.

Die Schneideinsätze bestehen meist aus Hartmetall oder anderen Hart-Werkstoffen, die meist nur durch Sintern oder Schleifen zu bearbeiten sind. Die langgestreckte flach leistenartige Form der Schneideinsätze ermöglicht eine rationelle Fertigung.

Fig. 3 zeigt in starker Vergrößerung einen Schnitt durch die mittlere Klemmschraube 16 und den Schneideinsatz 15 in eingespanntem Zustand. Es ist zu erkennen, dass die Ausnehmung 18 eine der Dicke des Schneideinsatzes 15 angepaßte Breite hat und im wesentlichen radial in den Fräserschaft 14 eingeschnitten ist. Der Schneideinsatz liegt mit seiner in der Zeichnung unteren Seite 24 an der entsprechenden Fläche des Schneideinsatzes an und ist auch mit seiner Endfläche 25 an dem Grund der Ausnehmung.

Die Ausnehmung wird von einer Bohrung 29 gekreuzt, deren Bohrungsachse 30 rechtwinklig auf der durch die Mittelachse repräsentierten Mittelebene der Ausnehmung 18 und des Schneideinsatzes 15 steht. Die Bohrung 29 ist in dem ihrer Mündung zugekehrten Teil als Gewindebohrung 17 ausgebildet, in die die Klemmschraube 16 eingeschraubt ist. Diese ist eine kopflose Madenschraube mit einer inneren Schlüsselfläche, z.B. einem Innensechskant 31. An ihren dem Schneideinsatz 15 zugekehrten Ende hat sie einen Vorsprung 32 von geringerem Durchmesser, dessen Endfläche 33 in einer der Vertiefungen 27 liegt, und zwar auf deren Boden 34, der parallel zu den Seiten 24 und damit zur Mittelebene 20 ist.

Es ist zu erkennen, dass eine relativ große und kräftige Klemmschraube verwendet werden kann, was bei den teilweise sehr kleinen Abmessungen der Fräswerkzeuge ein Vorteil ist. Die Klemmschraube 16 wirkt mit ihrem Vorsprung 32 in der Vertiefung 27 auf den Schneideinsatz und drückt diesen mit der in Fig. 3 unteren Seite 24 an die Seitenwand der Ausnehmung 18, ohne jedoch eine Kraft in Richtung der Mittelebene 20 auf den Schneideinsatz auszuüben. Die schrägen Seiten des Vorsprunges 32 wirken nicht mit den Rändern 35 der Vertiefung zusammen, wenn der Schneideinsatz ordentlich festgeklemmt ist. Wenn diese Klemmschraube und auch die beiden übrigen Klemmschrauben, die, wie die Figuren 4a bis 4c zeigen, auf die glatten Seitenflächen 24 wirken, gelöst wären, dann würde die die Vertiefung 27 zur Endfläche 25 hin begrenzende Erhebung 36 den Schneideinsatz gegen Herausfallen sichern, bis die mittlere Klemmschraube 16 soweit herausgedreht ist, dass der Vorsprung 32 ganz aus der Vertiefung heraus kommt.

Eine Betrachtung der Fig. 2 sowie der Figuren 4a bis 4c zeigt, dass die Gewindebohrungen 17 der Klemmschrauben 16 in Längsrichtung des Fräswerkzeugs 11, also längs der Werkzeugmittelachse 19, so gegeneinander versetzt sind, dass jeweils auf einer radialen Ebene nur eine Gewindebohrung vorgesehen ist, die den Fräserschaft schwächt.

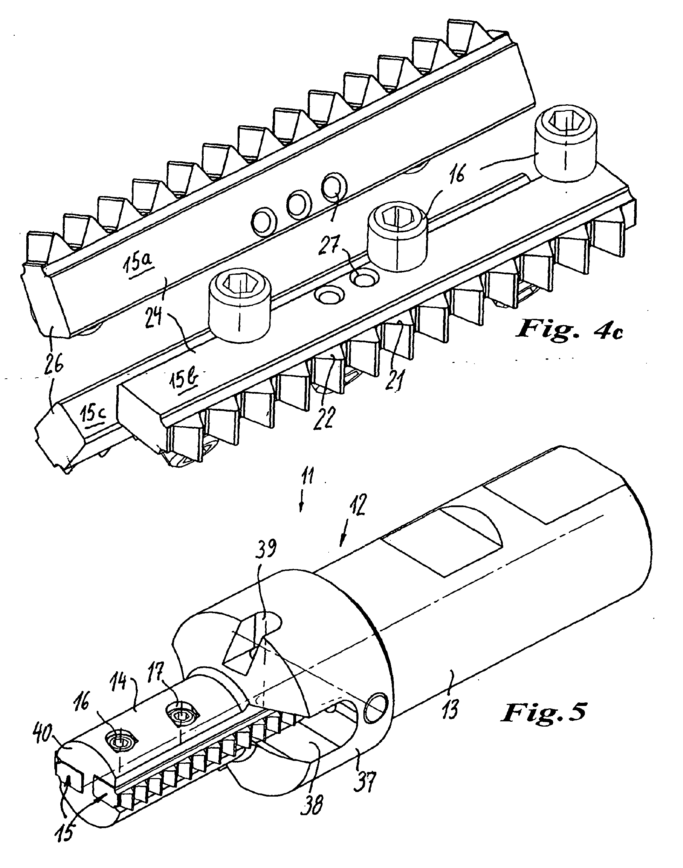

Um dies zu demonstrieren, sind in den Figuren 4a bis 4c die miteinander identischen Einsätze 15 mit den Indizes a bis c bezeichnet. Es ist zu erkennen, dass bei dem Einsatz 15a die Klemmschrauben am weitesten links (bzw. vorn) angreifen und dementsprechend auch die mittlere Klemmschraube 16 in das am weitesten links liegende Vertiefungsloch 27 eingreift, während dies beim Einsatz 15b (Fig. 4b) jeweils eine mittlere Position ist und beim Einsatz 15c (am bestehen zu sehen in Fig. 4c) die Klemmschrauben jeweils auf der am weitesten rechts liegenden Seite angreifen. Der jeweilige Versatz entspricht also dem Längsabstand der Vertiefungen 27 voneinander und sollte vorzugsweise mindestens so groß sein wie der Durchmesser der Gewindebohrungen 17.

Es ist also zu erkennen, dass trotz der Verwendbarkeit relativ großer und kräftiger Klemmschrauben mit einer inneren Schlüsselfläche (Innensechskant, Torx oder dgl.) der Fräserschaft und damit die Gesamtabmessung relativ klein ausgeführt werden kann und damit der sowohl festigkeitsmäßig als auch schwingungsmäßig stark beanspruchte Fräserschaft ohne wesentliche strukturelle Schwächung bleibt. Dies ist besonders wichtig für Gewindefräser zum Fräsen von Innengewinden, deren Gesamtdurchmesser ja kleiner sein muss als die zu bearbeitende Gewindebohrung.

Fig. 5 zeigt eine Ausführung mit nur zwei Schneideinsätzen 15. Die Ausbildung ist im übrigen identisch mit der nach den Figuren 1 bis 4 mit dem Unterschied, dass der Werkzeughalter 12 zwischen dem Einspannschaft 13 und dem Fräserschaft 14 einen verdickten Abschnitt 37 aufweist, der Ausschnitte 38 hat, in den ein Teil des Einspannschafts hinein ragt und dort abgedeckt liegt. In einem weiteren Ausschnitt 39 ist die Gewindebohrung einer der Klemmschrauben angeordnet. Diese Ausführung ist vorgesehen, um längere Schneideinsätze 15 auch für nur kurze Gewinde vorzusehen und die Steifigkeit des Gesamtwerkzeugs noch weiter zu erhöhen.

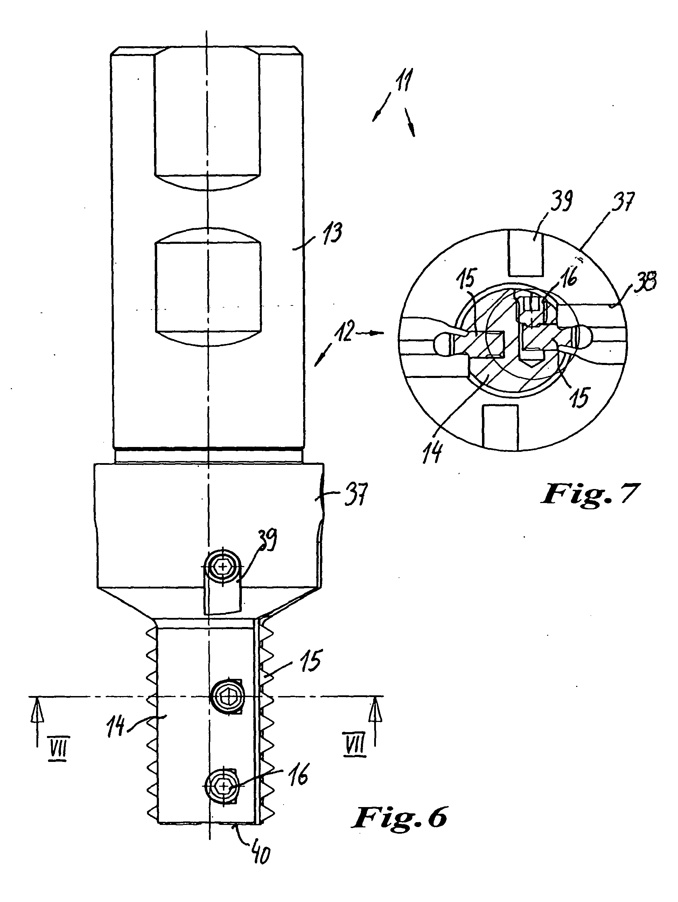

Fig. 6 zeigt das Werkzeug nach Fig. 5 in Draufsicht. Es ist dort ebenso wie in Fig. 2 zu erkennen, dass der Abstand zwischen der jeweils vorderen, dem freien Ende 40 des Fräswerkzeugs 11 zugekehrten Klemmschraube und der mittleren, in die Vertiefung 27 eingreifenden Klemmschraube geringer ist als der Abstand zur am weitesten von der Endfläche 40 entfernt liegenden Klemmschraube. Dies berücksichtigt die stärkere Beanspruchung und Schwingungsempfindlichkeit des Werkzeugs nahe seinem freien Ende 40.

Fig. 7 zeigt im Schnitt die Anordnung, die schon anhand Fig. 3 detailliert beschrieben wurde, und zeigt deutlich, dass durch das Fehlen der Klemmschraube für den links liegenden Schneideinsatz 15 in der dargestellten Ebene der Fräserschaftquerschnitt wesentlich größer ist als bei einer unversetzten Anordnung.

Die in den Zeichnungen dargestellten Ausführungen und Dimensionierungen des Fräswerkzeugs und des Schneideinsatzes sind besonders vorteilhaft und auf die zeichnerische Darstellung wird zum Zwecke der Offenbarung ausdrücklich Bezug genommen.

## Patentansprüche

1. Fräswerkzeug (11), insbesondere Gewindefräser, mit einem um eine Werkzeugachse (19) drehbaren Werkzeughalter (12) und mehreren daran anbringbaren Schneideinsätzen (15), die wenigstens eine Schneide (21), zwei Seiten (24), eine Endfläche (25) und zwei Stirnflächen (26) haben und die in im wesentlichen in Werkzeugachsrichtung (19) verlaufende, über den Werkzeughalterumfang verteilte, nutartige Ausnehmungen (18) des Werkzeughalters (12) einsetzbar und durch auf eine Seite (24) des Schneideinsatzes (15) wirkende Klemmschrauben (16) festsetzbar sind, die in Gewindebohrungen (17) eingeschraubt sind, die unter einem Winkel zu der Mittelebene der Ausnehmungen ausgerichtet sind, **dadurch gekennzeichnet, dass** entsprechende Gewindebohrungen (17) für benachbarte Ausnehmungen (18) in Richtung der Werkzeugachse (19) gegeneinander versetzt sind.

2. Fräswerkzeug nach Anspruch 1, **dadurch gekennzeichnet, dass** der Winkel ein rechter Winkel ist.

3. Fräswerkzeug nach Anspruch 1 oder 2, **dadurch gekennzeichnet, dass** die Klemmschrauben (16) im wesentlichen rechtwinklig auf die Seite (24) des Schneideinsatzes (15) wirken, wobei vorzugsweise diese und ggf. auch die ihr gegenüberliegende Seite (24) parallel zueinander und parallel zur Mittelebene (20) des Schneideinsatzes (15) ist.

4. Fräswerkzeug nach einem der vorhergehenden Ansprüche, **dadurch gekennzeichnet, dass** wenigstens eine der Klemmschrauben (16), vorzugsweise eine axial zwischen zwei anderen liegende, mit einer flachen Vertiefung (27) in der Schneideinsatz-Seite (24) zusammenwirkt, deren Vertiefungsboden (34) eine zur Seiten- und Mittelebene (20) parallele Fläche bildet, wobei die Vertiefung (27) zumindest zur Endfläche hin durch eine über den Boden (34) vorstehende Erhebung (36) begrenzt ist.

5. Fräswerkzeug nach Anspruch 4, **dadurch gekennzeichnet, dass** die Vertiefung (27) eine kreisrunde Senkung ist.

6. Fräswerkzeug nach Anspruch 4 oder 5, **dadurch gekennzeichnet, dass** wenigstens zwei, vorzugsweise drei nebeneinander liegende Vertiefungen (27) in einer, vorzugsweise jeder Seite (24), des Schneideinsatzes (15) vorgesehen sind, die zum Zusammenwirken mit entsprechend axiale versetzten Klemmschrauben (16) angeordnet sind.

7. Fräswerkzeug nach einem der Ansprüche 4 bis 6, **dadurch gekennzeichnet, dass** so viele Vertiefungen (27) in einer Seite vorgesehen sind, wie Schneideinsätze (15) je Fräswerkzeug (11).

8. Fräswerkzeug nach einem der vorhergehenden Ansprüche, **dadurch gekennzeichnet, dass** die Schneideinsätze (15) die Form langgestreckter Leisten haben, die als Schneide (21) ein Gewindeschneidprofil tragen und/oder als Wendeplatten ausgebildet sind.

9. Fräswerkzeug nach einem der vorhergehenden Ansprüche, **dadurch gekennzeichnet, dass** je Ausnehmung (18) eine mittlere und zwei jeweils näher an den Stirnflächen (26) angreifende Klemmschrauben (16) vorgesehen sind.

10. Fräswerkzeug nach einem der vorhergehenden Ansprüche, **dadurch gekennzeichnet, dass** die Klemmschraube (16) an ihrer an dem Schneideinsatz (15) angreifenden Endfläche (33) einen eine Klemmfläche bildenden Vorsprung (32) haben.

11. Fräswerkzeug nach einem der vorhergehenden Ansprüche, **dadurch gekennzeichnet, dass** der Versatz mindestens in der Größenordnung des Durchmessers der Gewindebohrungen (17) liegt.

12. Fräswerkzeug nach einem der vorhergehenden Ansprüche, **dadurch gekennzeichnet, dass** an dem Schneideinsatz in einem mittleren Bereich der Schneideinsatzlänge wenigstens eine als Einsenkung ausgebildete Vertiefung (27) vorgesehen ist, deren im wesentlichen ebene und parallel zur Mittelebene (20) des Schneideinsatzes (15) verlaufende Bodenfläche (34) so viel größer ist als die ihm zugeordnete Endfläche (33) der Klemmschraube (16), dass in festgeklemmtem Zustand der umlaufende Rand des wirksamen Endes der Klemmschraube (16) den Rand der Vertiefung nicht berührt..

13. Fräswerkzeug nach Anspruch 12, **dadurch gekennzeichnet, dass** mehrere, vorzugsweise drei, nebeneinander liegende Vertiefungen (27) vorgesehen sind.

## Claims

1. Cutting tool (11), particularly thread cutter, with a tool holder (12) rotatable about a tool axis (19) and several cutting inserts (15) fittable thereto and which have at least one cutting edge (21), two sides (24), an end face (25) and two front faces (26) and which can be inserted in slot-like recesses (18) of the tool holder (12) distributed over the tool holder circumference and running substantially in the tool axial direction (19) and fixable by clamping screws (16) acting on one side (24) of the cutting insert (15) which are screwed into the tapped holes (17), which are oriented under an angle to the median plane of the recesses, **characterized in that** corresponding tapped holes (17) for adjacent recesses (18) are displaced relative to one another in the direction of the tool axis (19).

2. Cutting tool according to claim 1, **characterized in that** the angle is a right angle.

3. Cutting tool according to claim 1 or 2, **characterized in that** the clamping screws (16) act substantially at right angles on the side (24) of cutting insert (15) and preferably the latter and optionally also the side (24) facing the same are parallel to one another and to the median plane (20) of the cutting insert (15).

4. Cutting tool according to one of the preceding claims, **characterized in that** at least one of the clamping screws (16), preferably a screw positioned axially between two other screws, cooperates with a shallow depression (27) in the cutting insert side (24), whose bottom (34) forms a surface parallel to the lateral and median plane (20), the depression (27), at least towards the end face, being bounded by an elevation (36) projecting over the bottom (34).

5. Cutting tool according to claim 4, **characterized in that** the depression (27) is a circular cavity.

6. Cutting tool according to claim 4 or 5, **characterized in that** at least two and preferably three juxtaposed depressions (27) are provided in one, preferably each side (24) of the cutting insert (15) and cooperate with correspondingly axially displaced clamping screws (16).

7. Cutting tool according to one of the claims 4 to 6, **characterized in that** there are the same number of depressions (27) in one side as there are cutting inserts (15) per cutting tool (11).

8. Cutting tool according to one of the preceding claims, **characterized in that** the cutting inserts (15) are in the form of elongated ledges, which carry as the cutting edge (21) a thread cutting profile and/or are constructed as turnover plates.

9. Cutting tool according to one of the preceding claims, **characterized in that** for each recess (18) are provided a central clamping screw (16) and in each case two other clamping screws engaging closer to the front faces (26).

10. cutting tool according to one of the preceding claims, **characterized in that** the clamping screws (16) have on their end face (33) engaging on the cutting insert (15) a projection (32) forming a clamping face.

11. Cutting tool according to one of the preceding claims, **characterized in that** the displacement is at least of the same order of magnitude as the diameter of the tapped holes (17).

12. Cutting tool according to one of the preceding claims, **characterized in that** in a central area of the cutting insert length is provided at least one depression (27) in the form of a cavity and whose substantially planar bottom (34) running parallel to the median plane (20) of the cutting insert (15) is so much larger than the end face (33) of the clamping screw (16) associated therewith, that in the clamped state the circumferential edge of the active end of the clamping screw (16) does not contact the edge of the depression (27).

13. Cutting tool according to claim 12, **characterized in that** there are several, preferably three juxtaposed depressions (27).

## Revendications

1. Outil de fraisage (11), notamment fraise à fileter, avec un porte-outil (12) rotatif autour d'un axe d'outil (19) et plusieurs inserts de coupe (15), qui présentent au moins un tranchant (21), deux faces (24), une surface terminale (25) et deux surfaces frontales (26), qui peuvent être insérés dans des creux (18) du porte-outils (12), présentant des formes de rainures, s'étendant essentiellement en direction de l'axe de l'outil (19) et distribués autour de la circonférence du porte-outils, et qui peuvent être fixés par des vis de serrage (16) qui agissent sur une face (24) de l'insert de coupe (15), les vis de serrage étant vissées dans des trous taraudés (17) orientés sous un certain angle par rapport au plan médian des creux, **caractérisé en ce que** des trous taraudés (17) correspondants pour des creux (18) limitrophes sont décalés l'un par rapport à l'autre en direction de l'axe d'outil (19).

2. Outil de fraisage d'après la revendication 1, **caractérisé en ce que** l'angle est un angle droit.

3. Outil de fraisage d'après la revendication 1 ou 2, **caractérisé en ce que** les vis de serrage (16) agissent essentiellement sous un angle droit sur la face (24) de l'insert de coupe (15), sachant que de préférence cette face et éventuellement aussi la face (24) située à l'opposé sont parallèles l'une à l'autre et parallèles au plan médian (20) de l'insert de coupe (15).

4. Outil de fraisage d'après une des revendications précédentes, **caractérisé en ce qu'**au moins une des vis de serrage (16), de préférence une vis de serrage qui se trouve axialement entre deux autres vis de serrage, agit conjointement avec un creux (27) qui n'est pas très prononcé, dans la face (24) de l'insert de coupe et dont le fond de creux (34) forme une surface parallèle au plan de la face et au plan médian (20), sachant que le creux (27) est délimité, au moins en direction de la surface terminale, par une saillie (36) proéminente au-dessus du fond (34).

5. Outil de fraisage d'après la revendication 4, **caractérisé en ce que** le creux (27) est un chanfreinage circulaire.

6. Outil de fraisage d'après la revendication 4 ou 5, **caractérisé en ce qu'**au moins deux, de préférence trois creux (27) l'un à côté de l'autre sont prévus dans une et de préférence dans chaque face (24) de l'insert de coupe (15), qui sont disposées de manière à pouvoir agir conjointement avec des vis de serrage (16) décalées axialement de manière correspondante.

7. Outil de fraisage d'après une des revendications de 4 à 6, **caractérisé en ce qu'**on prévoit autant de creux (27) dans une face que d'inserts de coupe (15) par outil de fraisage (11).

8. Outil de fraisage d'après une des revendications précédentes, **caractérisé en ce que** les inserts de coupe (15) présentent la forme de listels oblongs, qui portent en tant que tranchant (21) un profil d'outil à taraudage et/ou qui sont réalisés comme plaquettes réversibles.

9. Outil de fraisage d'après une des revendications précédentes, **caractérisé en ce qu'**on prévoit pour chaque creux (18) une vis de serrage (16) centrale et deux vis de serrage (16) qui s'engagent respectivement à proximité des surfaces frontales (26).

10. Outil de fraisage d'après une des revendications précédentes, **caractérisé en ce que** les vis de serrage (16) ont à leur surface terminale (33), qui s'engage sur l'insert de coupe (15), une saillie (32) constituant une surface de serrage.

11. Outil de fraisage d'après une des revendications précédentes, **caractérisé en ce que** le décalage est au moins dans l'ordre de grandeur du diamètre des trous taraudés (17).

12. Outil de fraisage d'après une des revendications précédentes, **caractérisé en ce qu'**on prévoit au moins un creux (27) réalisé en tant que chambrage sur un insert de coupe, dans une zone centrale de la longueur de l'insert de coupe, dont la surface de fond (34) essentiellement plane et parallèle au plan médian (20) de l'insert de coupe (15) est d'autant plus grande que la surface terminale (33) correspondante de la vis de serrage (16), qu'en état serré le bord circonférentiel de l'extrémité efficace de la vis de serrage (16) n'atteint pas le bord du creux.

13. Outil de fraisage d'après la revendication 12, **caractérisé en ce qu'**on prévoit plusieurs, de préférence trois creux (27) l'un à côté de l'autre.
